# EUROPEAN PATENT SPECIFICATION

(11) **EP 2 482 080 B1**
(45) Date of publication and mention of the grant of the patent: **14.12.2016**
(21) Application number: 11152796.6
(22) Date of filing: 31.01.2011
(51) Int. Cl.: G01Q 30/20

(54) **Scanning probe microscope combined with a device for modification of the object surface**
Rastersondenmikroskop, mit einer Vorrichtung zur Modifizierung der Probenoberfläche zusammengestellt
Microscope à balayage de sonde combiné avec un dispositif pour la modification de la surface d'un échantillon

(43) Date of publication of application: 01.08.2012
(73) Proprietor: Efimov, Anton Evgenievich, Moscow Region 141540 (RU); Sokolov, Dmitry Yurievich, Moscow 124489 (RU); Matsko, Nadezda, 8010 Graz (AT); Graz Centre for Electron Microscopy (ZFE), 8010 Graz (AT)
(72) Inventor: Efimov, Anton Evgenievich, POVAROVO, Solnechnogorskyi District Region 141540 (RU); Sokolov, Dmitry Yurievich, ZELENOGRAD, MOSCOW 124489 (RU); Matsko, Nadezda, 8010 GRAZ (AT); Hofer, Ferdinand, 8042 Graz (AT)
(74) Representative: Koudine, Andreï

(56) References cited:
- RU-C2- 2 389 032
- OHTA M ET AL: "ULTRAHIGH VACUUM ATOMIC FORCE MICROSCOPE WITH SAMPLE CLEAVING MECHANISM", JOURNAL OF VACUUM SCIENCE AND TECHNOLOGY: PART B, AVS / AIP, MELVILLE, NEW YORK, NY, US, vol. 12, no. 3, 1 May 1994 (1994-05-01), pages 1705-1707, XP000464740, ISSN: 1071-1023, DOI: DOI:10.1116/1.587581
- EFIMOV ANTON E ET AL: "Atomic force microscope (AFM) combined with the ultramicrotome: a novel device for the serial section tomography and AFM/TEM complementary structural analysis of biological and polymer samples", JOURNAL OF MICROSCOPY, WILEY-BLACKWELL PUBLISHING LTD, GB, vol. 226, no. 3, 1 June 2007 (2007-06-01), pages 207-217, XP007915600, ISSN: 0022-2720 [retrieved on 2007-05-23]

## Description

The invention relates to measuring equipment, and more specifically, to scanning probe microscopes (briefly SPM) adapted for measurement of a surface of an object (a sample) received after mechanical modification of this surface, for example, after sectioning by a microtome.

The work principle of a scanning probe microscope (SPM) is to carry out a mechanical scanning over the sample surface with a probe in order to produce an image of the sample surface. Dimensions of a tip of the probe used usually lay the in range from 1 nanometer to 20 nanometers. Features within an image are determined by local variations in an interaction between the tip and the sample typically recorded as a function of the probe position while a raster scan of an area of the sample surface is carried out. Dimensions of the scanned area usually lay in the range from nanometers to hundreds of microns. Measured values may characterize Van der Waals interaction between the probe and the sample, electrical and magnetic forces between them and tunneling of electrons between the probe and the sample.

One of important aspects of SPM investigations is an appropriate preparation of the sample surface before measurements. For a number of materials, for example such as some polymers or biological samples, it is expedient to perform a mechanical modification of the surface, such as a microtome section [1], for subsequent measurements by the SPM.

Combination of SPM with a device for modification of the sample surface allows performing the necessary modification of the sample surface both before and between sequential measurements. For example if sequential thin sections of the surface are performed between the measurements of the surface in a same area then obtained images may be used for layer-by-layer three-dimensional reconstruction of structures in a volume of the sample [2, 3].

From the patent of Russian Federation RU 2 389 032 C2 it is known a scanning probe microscope combined with a device for modification of a surface of a sample comprising:
- a base, on which there are mounted:
   ∘ a punch provided with a first drive and adapted at least for the modification of the surface of the sample and
   ∘ a mechanism for the movement of the sample provided with a second drive,
- a scanning device mounted on the mechanism for the movement of the sample,
- the sample fixed on the scanning device,
- a first clamp provided with a probe adapted for probing the sample and
- a control unit adapted for controlling of at least the scanning device and the probe.

This device is chosen as the prototype of the present invention. A drawback of the prototype is that the mechanism for the movement of the sample and the first clamp with the probe are both mounted on the base what leads to increased nonfunctional movements of the probe and the sample in respect to each other and thus increases an inaccuracy of the measurement of the sample surface.

The technical result of the invention is to decrease the inaccuracy of the measurements of the sample surface.

The said technical result is achieved by a scanning probe microscope combined with a device for modification of a sample surface and corresponding to the above mentioned general description, characterized in that it comprises a platform with a first and a second guides on which a moveable carriage is mounted, in that the platform is fixed on the mechanism for the movement of the sample, and in that the first clamp with the probe are mounted on the moveable carriage.

There is a first embodiment of the invention in which the scanning probe microscope comprises a third drive conjugated with the moveable carriage. In this case the controlling unit is adapted for controlling the third drive.

In the first embodiment of the invention the third drive may be mounted either on the platform or on the base.

There is an alternative second embodiment of the invention in which the first drive is conjugated with the moveable carriage. In this case the controlling unit is adapted for controlling the first drive.

Accordingly to the invention, the scanning probe microscope may comprise a first screen mounted on the platform with a possibility of moving in regard to it.

Also, accordingly to the invention, the scanning probe microscope may comprise a second screen mounted on the platform with a possibility of moving in regard to it.

Also, accordingly to the invention, the scanning device may be fixed on the platform.

Also, accordingly to the invention, a module for modification of the probe may be mounted on the first drive. In this case the controlling unit is adapted for controlling the first drive.

In particular, accordingly to the invention, the module for modification of the probe may comprise a holder and a ring electrode with an electrolyte. In this case, the ring electrode is fixed in the holder.

Accordingly to the invention, the punch, the first clamp with the probe and the scanning device with the sample may be placed in a cryogenic chamber with a possibility of their cooling.

Other features and advantages of the invention follow from the description presented below for illustration of substance of the invention and without restriction for the last, with references to enclosed figures 1-12.

On the figure 1 it is shown schematically a simplified side view with a partial section of a scanning probe microscope combined with a device for modification of an object surface according to one of embodiments of the invention.

On the figure 2 it is shown schematically a simplified top view with a partial section of the scanning probe microscope combined with the device for modification of the object surface according to the figure 1 without a first screen.

On the figure 3 it is shown schematically the section in A-A plane according to the figure 1.

On the figure 4 it is shown schematically one embodiment of a sample fixation on a side view with a partial section.

On the figure 5 it is shown schematically one embodiment of a module for modification of the probe on a simplified side view with a partial section.

On the figure 6 it is shown schematically one embodiment of positioning of the probe along Y coordinate.

On the figure 7 it is shown schematically one embodiment of the implementation of the probe as a quartz resonator with a needle disposed along its shoulder, on a simplified side view.

On the figure 8 it is shown schematically on a simplified side view with a partial section one embodiment of the implementation of the probe as a quartz resonator with a needle disposed perpendicularly to its shoulder, as well as one embodiment of positioning of the probe in ZX plane.

On the figure 9 it is shown schematically on a simplified side view with a partial section one embodiment of mounting of a third drive on a base.

On the figure 10 it is shown schematically on a simplified side view with a partial section one embodiment of the implementation of a second screen.

On the figure 11 it is shown schematically on a simplified side view with a partial section one embodiment of an arrangement of the device in a cryogenic chamber.

On the figure 12 it is shown a schematic layout of a control unit of the scanning probe microscope.

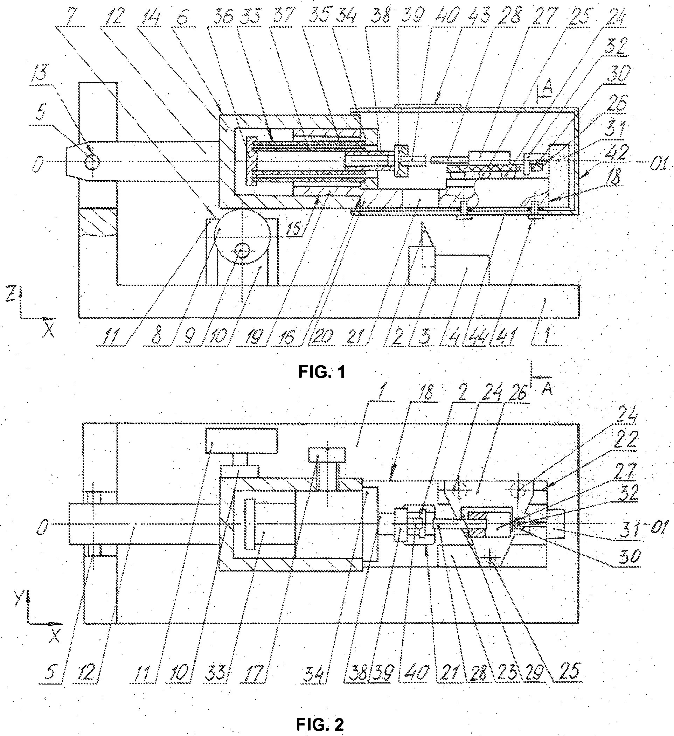

As is mentioned above and illustrated on the figures 1-12, the invention relates to scanning probe microscopes, briefly "SPM" adapted for measurement of a surface of a sample 40, obtained after mechanical modification of this surface, for example, after a section by a microtome.

A scanning probe microscope combined with a device for modification of the surface of the sample 40 comprises a base 1 (fig. 1, 2) which is elongated along an X coordinate (along a first (geometrical) axis OO₁) and on which a punch 2, fixed in a holder 3 and conjugated with a first drive 4, is mounted. The first drive 4 moves the holder 3 with the punch 2 along the coordinate X. The first drive 4 may be implemented as an inertial stepper piezodrive. A mechanism 6 for the movement of the sample 40 is also installed on the base 1 by means of a hinge 5, and is conjugated with a second drive 7. The second drive 7 may comprise a first eccentric 8 mounted on a second (mechanical) axis 9 (which is perpendicular to the first axis OO₁ on fig.1) in a first case 10 and conjugated with a rotational drive 11.

The mechanism 6 for the movement of the sample 40 may comprise:
- an arm 12 with a first opening 13 conjugated by a sliding fit with the hinge 5,
- a second case 14 which comprises an inner surface 15, a plane 16 and a first screw 17.

The inner surface 15 should be polished so that a height of surface microirregularities should not exceed 10 micrometers. Preferably the inner surface 15 should be polished so that the height of surface microirregularities should not exceed 10 micrometers. It advantages to decrease an inaccuracy of a measurement of the surface of the sample 40.

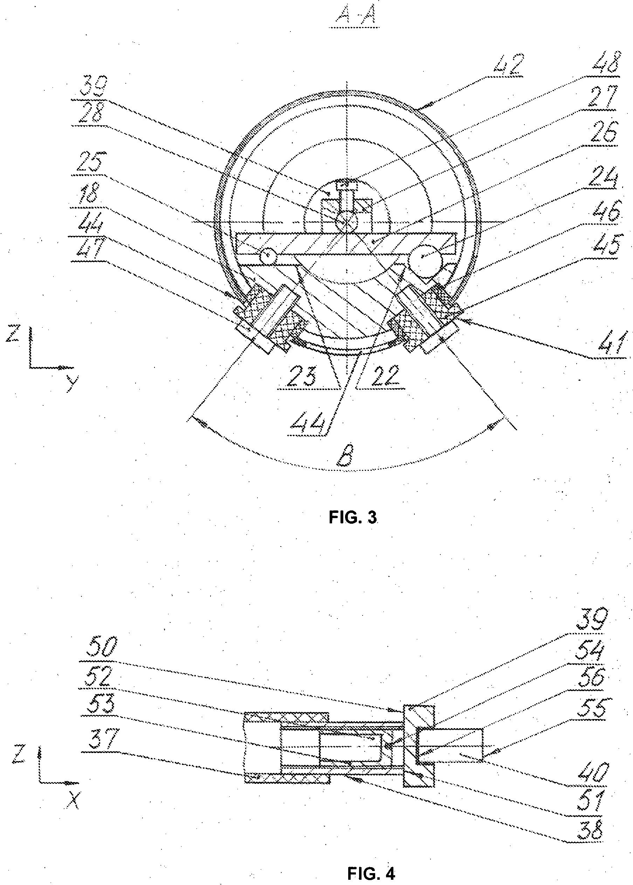

A platform 18, which is preferably made as a one part of complicated shape, is mounted on the mechanism 6 for the movement of the sample 40. The platform 18 comprises a base element 19, a protrusion 20, a second opening 21, a first guide 22 and a second guide 23. The first guide 22 may have a longitudinal groove along the X coordinate. A section of this longitudinal groove of the first guide 22 in a YZ plane perpendicular to the X coordinate may have V-shaped (an example shown on fig. 3) or U-shaped form (not shown). The second guide 23 may be made without a longitudinal groove along the X coordinate similar to above mentioned longitudinal groove of the first guide 22. In this case the second guide 23 is considered as a "flat" one. The platform 18 may be made from a hard alloy and surfaces of the first and second guides 22 and 23 should be polished in such way that the height of surface microirregularities should not exceed 0.5 microns. In an alternative embodiment a polycorundum plates may be glued to the first and second guides 22 and 23, (not shown). A moveable carriage 26 is installed on the first and second guides 22 and 23 by means of first balls 24 and a second ball 25 respectively. A first clamp 27 which holds a probe 28 is mounted on the moveable carriage 26. The moveable carriage 26 may comprise at least one first magnet 29 for the sake of additional preload towards the platform 18. In this case the platform 18 should be made of magnetic material or a magnetic inclusion may be fixed on it below the magnets 29 (not shown). The moveable carriage 26 is conjugated by means of a first notch 30 with a third drive 31. The third drive 31 comprises a first tappet 32 and is mounted on the platform 18. In another embodiment the third drive 31 may be mounted directly on the mechanism 6 for the movement of the sample 40 (not shown).

A scanning device (piezoscanner) 33 is mounted on the platform 18. It comprises a first flange 34 on which a first ending of a first piezoceramic tube 35 is fixed, for example by the glue. The scanning device (piezoscanner) 33 also comprises a second flange 36 which is placed opposite (along the X coordinate) to the first flange 34. A second ending of the first piezoceramic tube 35, which is opposite to its first ending, is fixed to the second flange 36, for example by the glue. Also, a first ending of a second piezoceramic tube 37 is fixed to the second flange 36, for example by the glue. An opposite to it (along X coordinate) second ending of the second piezoceramic tube 37 is provided with a grip 38 with a fixture 39 of a sample with the sample 40. The first and the second piezoceramic tubes 35, 37 may be coaxial (fig.1). It advantages to decrease the inaccuracy of the measurements of the surface of the sample 40. The second piezoceramic tube 37 may be inserted into the first piezoceramic tube 35. It advantages to simplify architecture of the device and of its assembling.

In one embodiment the scanning device 33 may be mounted directly to the mechanism 6 for the movement of the sample 40, namely on a plane of the case 14 (not shown). It advantages to simplify architecture of the device and of its assembling.

A first screen 42 is fixed on the platform 18 by the means of mounting elements 41 and is provided with an aperture 43 and a second notch 44. The aperture 43 may be made of the optically transparent material.

The first screen 42 may be either fixed on the platform 18 or mounted with a possibility of displacement along the coordinate X. For this sake the mounting elements 41 (fig. 3) may consist a first bushings 45 and a second bushings 46 which may be made of caprolone and fixed on the platform 18 by a second screws 47. In this embodiment the mounting elements 41 may be placed with a first angle B in respect to each other, where 70°≤B≤90°. For the motionless fixation of the first screen 42 there is no gap provided between the first and second bushings 45, 46 from one side and the first screen 42 from the other side. In contrast, for a mounting with a possibility of moving of the first screen 42, the gap is provided between the first and second bushings 45, 46 from one side and the first screen 42 from the other side.

As is schematically shown on the fig. 3, the probe 28 may be fixed in the first clamp 27 by a third screw 48. The probe 28 is shown schematically, it may be made as a needle or as a quartz resonator (see below).

In one embodiment the fixture 39 of the sample 40 is made of magnetic material. The fixture 39 has a first face 50 and the grip 38 have a second face 51 as it is shown on the fig. 4. At the same time the fixture 39 made of magnetic material may be installed by its first face 50 on the second face 51 of the grip 38 by means of a second magnet 52 which is fixed in a hollow screw 53 with a spline 54. The sample 40 with a working surface 55 may be fixed in the fixture 39 by an adhesive joint 56. The grip 38 may be also glued to the second piezoceramic tube 37 ((particularly in the above mentioned second ending of the second piezoceramic tube 37) (not shown).

A module for modification of the probe 28 may be mounted on the first drive 4.

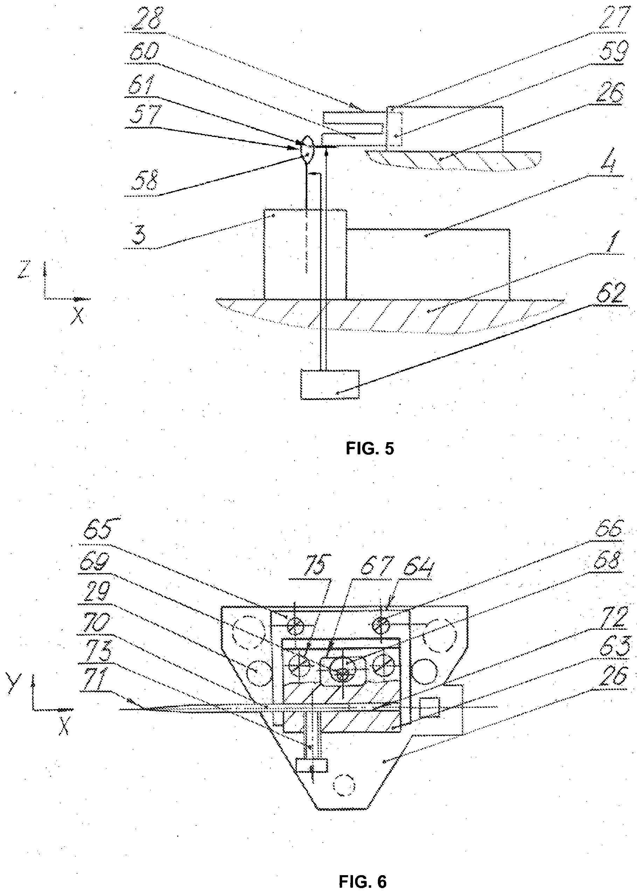

In particular, the module for the modification of the probe 28 may comprise the holder 3 (fig. 5) in which a ring electrode 57 with an electrolyte 58 is installed. The ring electrode 57 may comprise a filament made from a electrically conductive material, for example a metallic wire. For the simplification the same holder 3 may be used both for the punch 2 (as already mentioned above) and for the ring electrode 57. As the electrolyte 58 one may use, for example, a solution of potassium hydroxide KOH in ammonia. At the same time the probe 28 may be implemented as a first quartz resonator 59 on a first shoulder 60 of which a first needle 61 is fixed. In example shown on fig. 5 the first quartz resonator 59 comprises the first shoulder 60 and a second shoulder, and the first shoulder 60 is located closer, by Z coordinate, to the base 1. The first needle 61 may be made of tungsten W or PtIr alloy of platinum with iridium. At the same time the first needle 61 and the ring electrode 57 are connected to an electrical power supply 62 which may be made as a regulated source of an alternative voltage. The fixation of the ring electrode 57 in the holder 3 is shown on the fig. 5 schematically. It could be done by use of a ceramic insulators mounted instead of the punch 2 (not shown) or by a non-conductive glue.

A second clamp 63 of the probe 28 may be mounted on the moveable carriage 26. In one embodiment a positioning of the second clamp 63 (fig. 6) at least along the Y coordinate may be performed by a fourth drive 64 which comprises third guides 65 mounted on the moveable carriage 26 by means of fourth screws 66. As shown on the fig. 6, the third guides 6 may have Π-shaped profile in XY plane. The second clamp 63 of the probe may have a rectangular groove 67 which is conjugated with a second eccentric 68. The second eccentric 68 is connected with a fifth screw 69 mounted on the moveable carriage 26 with a possibility of rotation. On fig. 6 it is shown also a fixation of a probe made as a second needle 70 with a tip 71 fixed in a third opening 72 of the second clamp 63 by a sixth screw 73. The fixation of the second clamp 63 on the moveable carriage 26 may be done by fixing seventh screws 75. Positioning of the second clamp 63 at least along the Y coordinate is performed at loosening of the fixing seventh screws 75 within the limits of gaps between them and their fixing apertures (not shown).

As a module for modification of the probe 28 one can use a part of the punch 2 which may be used if necessary for a sectioning or a bending of at least predetermined part of the probe 28 (i.e. changing of its inclination angle to at least one of the coordinates chosen among the coordinates X, Y, Z), for example for the bending of the tip 71 of the second needle 70, mentioned above.

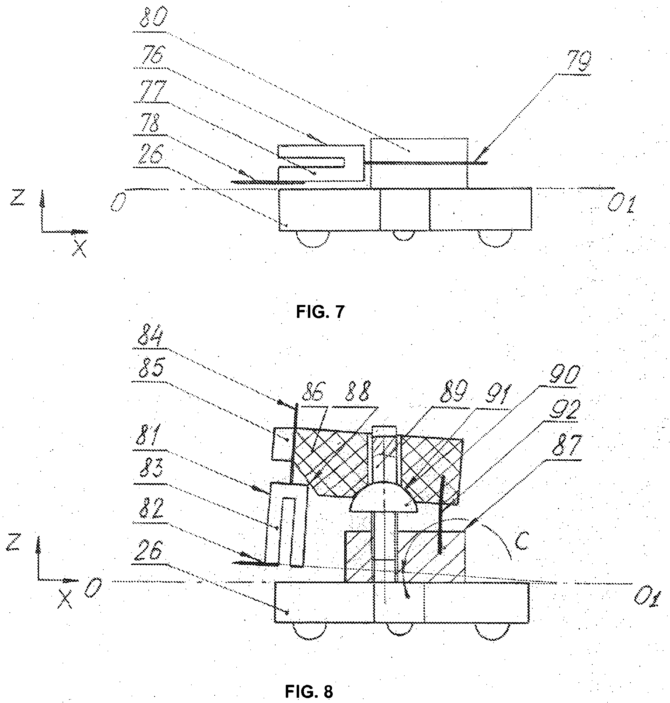

In one embodiment (fig. 7) the probe 28 may be implemented as a second quartz resonator 76 with a third needle 78 fixed on one of its shoulders, defined as "a third shoulder 77". First connectors 79 of the second quartz resonator 76 are gripped between first insulators 80 (for example between the two first insulators 80, as it is shown on fig. 7).

In another embodiment (fig. 8) the probe 28 may be implemented as a third quartz resonator 81 with a fourth needle 82 fixed on a fourth shoulder 83. The third quartz resonator 81 may be mounted with second connectors 84 between a second and a third insulators 85 and 86 which are fixed on a lath 87. At the same time the third quartz resonator 81 may touch by its edge 88 a third insulator 86. Positioning of the third quartz resonator 81 at least in the ZX plane may be performed by a fifth drive comprising an eighth screw 89 which is mounted on the lath 87 with a possibility of movement. At the same tame a spherical element 90 of the eighth screw 89 is interacting with a face 91 of the third insulator 86. The fixation of the third insulator 86 on the lath 87 may be done by means of a flat spring 92 which besides a spatial orientation of the third quartz resonator 81 provides a preload of the third insulator 86 to the spherical element 90 of the eighth screw 89. The positioning of the third quartz resonator 81 also changes a second angle C measured between the fourth needle 82 and the first axis OO₁ which is parallel or coinciding with the X coordinate (fig. 8). Usually the positioning within in the range of 1 mm is enough. In this case a real change of the second angle C takes place within the range of several degrees. It practically does not make any effect to the device performance. Moreover due to change of this second angle C an optical observation of a measurement zone can be improved, since the probe 28 less obscures it in this case.

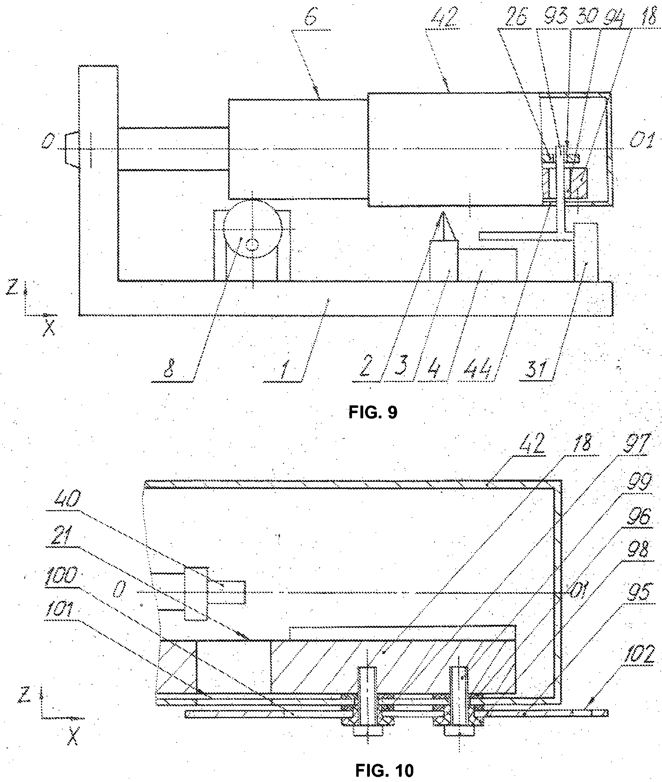

In one embodiment the third drive 31 (fig. 9) may be mounted on the base 1. In this case its second tappet 93 may interact with the moveable carriage 26 by means of the first notch 30 through the second notch 44 in the first cover 42 and a slot 94 in the platform 18.

In another possible embodiment the second tappet 93 may be fixed on the first drive 4 (fixation is not shown). Then the moveable carriage 26 may be moved by means of the first drive 4. In this case the third drive 31 may be displaced from the base 1. It may be used as an auxiliary working regime of the device.

In one embodiment (fig. 10) a second screen 95 may be mounted on the first screen 42. The mounting element 41 may comprise a first spacer 96, a second spacer 97 and a third bushing 98 connected by a ninth screw 99. As it is shown on the fig. 10, there is a third notch 100 made in the second screen 95. Dimensions of the first and second spacers 96 and 97 are then chosen in such way, that the first screen 42 is fixed firmly while the second screen 95 is mounted with a possibility of movement along the coordinate X by means of the third notch 100. The first spacer 96, the second spacer 97 and the third bushing 98 may be made of caprolone and the thickness of the first and the second spacers 96, 97 may be within the range from 0,2 to 0,3 mm. There is a fourth notch 101 made in the second screen 95 which is located in front of the second opening 21. For the possibility of the movement the second screen 95 may have a selective zone (for example a fourth opening 102, as shown on the fig.10, or a stake (not shown), or an indent (not shown), or a zone of increased friction) by which an operator may perform a grip of the second screen 95 and its movement along the coordinate X.

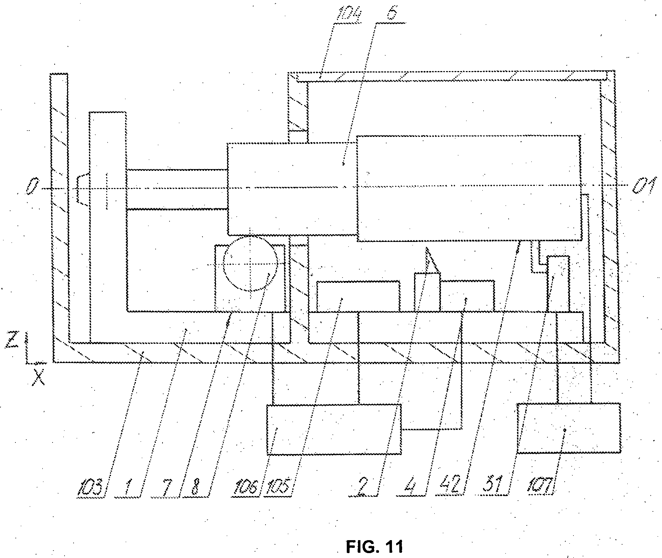

In one embodiment the punch 2 with the first drive 4, the mechanism 6 for the movement of the sample and the third drive 31 may be placed inside a cryogenic chamber 103 (fig. 11) with a cover 104. The cryogenic chamber 103, the first drive 4, the second drive 7 and a cooling unit 105 are connected to a first controlling unit 106 which provides needed regime of cooling and sectioning of the sample 40.

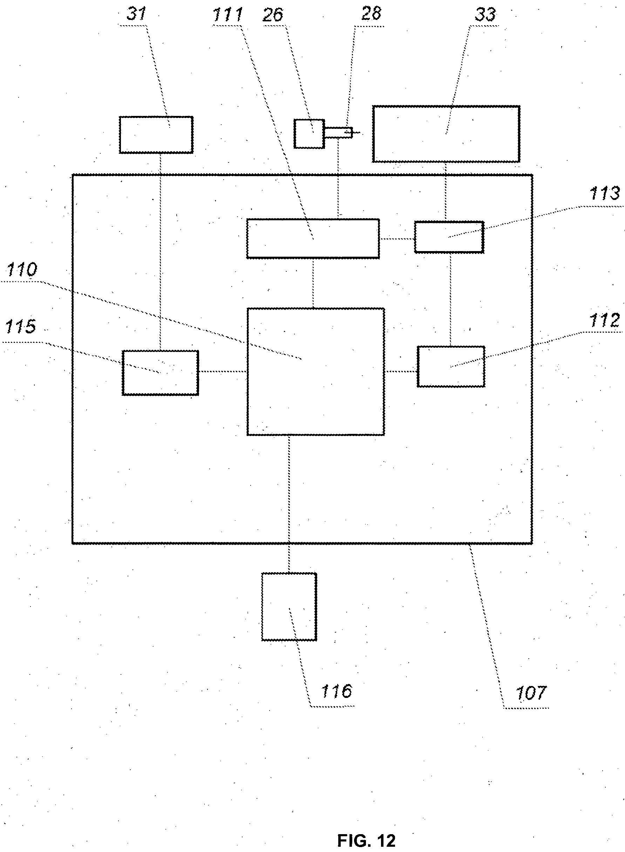

The scanning probe microscope combined with the device for the modification of the surface of the sample (40) comprises a second controlling unit 107 which is connected to at least the scanning device (piezoscanner) 33 and the probe 28. The second controlling unit 107 is adapted to control at least the scanning device (piezoscanner) 33 and the probe 28. As it is shown on the fig. 11, the third drive 31 may be connected to the second controlling unit 107. In this case the second controlling unit 107 is also adapted to control the third drive 31 and may comprise a central processor unit 110 (fig. 12) which may be built, for example, on the basis of a 32-bit digital signal processor, briefly DSP. The central processor unit 110 is conjugated with a module of digital lock-in amplifier 111 which is connected to the probe 28, with a 3-channel unit of digital-analog converters (briefly DAC) 112, and with a controller 115 of the third drive 31. The 3-channel unit of DAC 112, in turn, may be connected with a 3-channel module of high-voltage amplifiers 113 which is connected to the scanning device (piezoscanner) 33. The central processor unit 110 may comprise an analog-digital converter (ADC) and a set of interfaces for communication with other devices comprised in the second controlling unit 107 and also with an operating computer 116. The module of digital lock-in amplifier 111 may be implemented with use of a high-speed digital-analog and analog-digital converters and a programmed logical integrated circuit and may comprise a precise signal amplifier and a highly stable generator of an excitation signal connected to the probe 28.

The scanning probe microscope combined with the device for the modification of the surface of the sample (40) operates as follows. The punch 2 is fixed in the holder 3 (fig. 1).The sample 40 is fixed in the fixture 39. A polymer, an elastomer or biological materials may be used as the samples 40. After that, it is started the second drive 7 which, by means of the first eccentric 8:
- moves down (i.e. towards the base 1) the mechanism 6 for the movement of the sample and the sample 40, along the coordinate Z, and
- performs its mechanical modification by a working surface of the punch 2.

If a knife is used as the punch 2 then a section of the sample 40 is performed therefore. After that with use of the same first eccentric 8 the mechanism 6 of the movement of the sample is moved up to an initial position.

In the embodiment, when the second screen 95 (fig. 10) is mounted on the first screen 42, after the section of the sample 40 the second screen 95 is moved in such way that it closes the opening 21.

After that the probe 28 is approached to the surface of the sample 40. For that the third drive 31 is operated, and it moves the moveable carriage 26 by the first tappet 32 towards the sample 40 along the X coordinate. When a tip of the probe 28 reaches the surface of the sample 40, the first tappet 32 is driven back in the gap of the first notch 30 so it does not interfere mechanically with a measurement of the surface of the sample 40.

In the embodiment of the fixation of the probe 28 as the second needle 70 on the second clamp 63 with the possibility of its positioning at least along the coordinate Y by means of the fourth drive 64 (fig. 6) before the final approach of the probe 28 (the second needle 70) to the surface of the sample 40 an additional adjustment of the position of the probe 28 may be performed along the coordinate Y with use of the fifth screw 69. After the adjustment the position of the probe 28 (the second needle 70) is fixed by the fixing seventh screws 75.

In the embodiment (fig. 8) of mounting of the probe 28 in form of the third quartz resonator 81 with the fourth needle 82 on the moveable carriage 26 (with the possibility of positioning at least in the plane ZX by means of the fifth drive) additional adjustment of the position of the probe 28 (the fourth needle 82) by the coordinate Z and the second angle C of inclination of the fourth needle 83 in respect to the first axis OO₁ (or to coordinate X) may be performed before the final approach of the probe 28 (the third quartz resonator 81) to the surface. This additional adjustment is performed with use of the eighth screw 89 by the interaction of its spherical element 90 with the face 91 of the third insulator 86. Taking into account an oscillatory mode of functioning of the third quartz resonator 81, an unambiguous and stable (i.e. steady) mechanical contact of the edge 88 and the third isolator 86 is important. It may be provided by linear (by the coordinate Y to thickness of the third quartz resonator 81) contact between the edge 88 and the third isolator 86. Such contact minimizes an amount of possible pollutions of a contact zone and mechanical instabilities related to them due to its minimal area. Characteristic thickness of the third quartz resonator 81 is 0,3 mm and radius of a curvature of the edge 88 is 0,1 mm. This in turn provides a stability of a quality factor of the third quartz resonator 81 in time and improves an accuracy of the measurement.

During such adjustment of the position of the probe 28 (the fourth needle 82) the first screen 42 may be shifted along the coordinate X providing an access to the fifth and eighth screws 69 and 89 respectively.

After the approach of the probe 28 to the surface of the sample 40 a raster scanning of set surface area of the sample 40 with a set raster step is performed by means of the scanning device (piezoscanner) 33. In the embodiment when the probe 28 is implemented as the second quartz resonator 76 with the third needle 78 fixed on one of its shoulders (the third shoulder 77) (fig. 7) an amplitude of oscillations of the second quartz resonator 76 is measured by the module of digital lock-in amplifier 111 (fig. 12) in each point of a raster scan. Then the central processor unit 110 conjugated with the 3-channel digital-analog converter unit 112 and the 3-channel module of high-voltage amplifiers 113 applies a voltage to the piezoscanner 33 according to a set feedback algorithm. As a result, the piezoscanner 33 moves the sample 40 along the coordinate X. At the same time the amplitude of the oscillations of the second quartz resonator 76 is maintained as close to an initially set value as it is possible. The voltage applied to the piezoscanner 33, which is controlling the movement of sample 40 along the X coordinate, is recalculated in each point of the raster scan by the central processor unit 110 to the X coordinate of a corresponding point of the surface. Therefore a 3-dimensional image of topography of an investigated surface area of the sample 40 may be acquired. An additional measurement of a phase shift of oscillations of the second quartz resonator 76 respectively to a reference signal from the highly stable generator in each point of the raster scan enables one to obtain information about mechanical properties of the surface of the sample 40 in corresponding points.

After finishing of the measurements the third drive 31 is operated again. The first tappet 32 (fig. 1) remotes the moveable carriage 26 with the probe 28 fixed on it from the surface of sample 40 due to its interaction with the first notch 30.

In the embodiment when the second screen 95 mounted on the first screen 42 (fig. 10), after the measurement of the sample 40 the second screen 95 is moved in such way that the fourth notch 101 comes in front of the second opening 21.

After that a next sectioning of the sample 40 and a next measurement of its surface is performed. As a result, the samples 40 may be investigated by three coordinates X, Y, Z. Each next section of the sample 40 may be performed due to a movement of the holder 3 with the punch 2 by the first drive 4 along the coordinate X for a distance corresponding to a section thickness which usually lies within a range from 10 nanometers to 1 micrometer.

If the module of the modification of the probe 28 (fig. 5) is used then additional sharpening of the first needle 61 of the probe 28 by electrochemical etching in the electrolyte 58 may be performed before the measurements of the surface of the sample 40. For that sake the ring electrode 57 mounted in the holder 3 is moved to a required position by the first drive 4 and then the probe 28 (the first needle 61) is appropriately positioned by the second drive 7 and the mechanism 6 of the movement of the sample 40 and is approached to a surface of the electrolyte 58 by means of the third drive 31. Then a controlled alternating voltage is applied between the first needle 61 of the probe 28 and the ring electrode 57 by means of the power supply 62. Usually the voltage applied lies within the range from 1 Volt to 20 Volts. After the sharpening of the first needle 61 of the probe 28 the punch 2 is mounted in the holder 3 instead of the ring electrode 57. If part of the punch 2 is used as the module of the modification of the probe 28 and the probe 28 (the second needle 70) is mounted according to the Fig. 6 then the fourth drive 64 may be used for additional positioning of a respective position of the punch 2 and the probe 28 (the second needle 70) along the coordinate Z. After that the second drive 7 is operated and a required sectioning or bending of the tip 71 of the second needle 70 (the probe 28) is performed by the punch 2.

If the punch 2, the first clamp 27 with the probe 28 and the scanning device (piezoscanner) 33 with the sample 40 are placed in the cryogenic chamber 103 (Fig. 11) then it is possible to cool the sample 40 and to perform its section (modification) by the punch 2 and measurement of the surface of the sample 40 in a cooled condition. It is expedient to investigate in the cooled condition biological objects, liquids and so called "soft" polymer and elastomer materials, i.e. polymer and elastomer materials with their glass transition temperature below the room temperature: T_{C} < 20°C. In this case the sample 40 is cooled down to a temperature T_{O} which is optimal for performing of its sectioning (modification) by the punch 2. For example, for the sample 40 made of a soft polymer or elastomer material an optimal temperature To for its sectioning (modification) by the punch 2 may be considered as the temperature equal or below its glass transition temperature T_{C}: T_{O}≤T_{C}. A degree of cooling (and/or freezing) of the sample 40 is determined by the specifications of the cryogenic chamber 103. For example if a liquid nitrogen is used as a cooling agent in the cryogenic chamber 103 then it is possible to cool the sample 40 down to the temperature about -190°C.

Introduction of the platform 18 with the first and the second guides 22, 23 fixed on the mechanism 6 of the movement of the sample 40 decreases the quantity of intermediate parts between the probe 28 and the sample 40. Therefore it decreases their nonfunctional movements in respect to each other and increases an accuracy of a measurement.

The fixation of the sample 40 on the scanning device (piezoscanner) 33 and mounting of it on the mechanism 6 of the movement of the sample 40 allows increasing of mechanical resonance frequencies of a system due to decrease of a weight of a scanning parts. It in turn results in increase of system stability in respect to external vibrations what increases the accuracy of the measurements.

Mounting of the first clamp 27 with the probe 28 on the moveable carriage 26 unloads the scanning device (piezoscanner) 33 by mass and according to the paragraph above increases the accuracy of the measurements. Besides this it improves the reliability of the system as manipulations with the probe 28 such as its mounting, connecting and orientation became less laborious. It in turn results in decrease of a probability of breakage of the scanning device (piezoscanner) 33 in comparison with the above mentioned prototype from the patent of Russian Federation RU 2 389 032 C2.

Providing of the device with the third drive 31 conjugated with the moveable carriage 26 besides the primary effect - simplification of the approach of the probe 28 to the sample 40 - also broadens opportunities for manipulations with the probe 28 such as its observation by a regular optical microscope or its operative sharpening during the work (see below). It enables one to perform measurements with the probe 28 of high quality what results in increase of the accuracy of the measurement.

The introduction of the first and/or the second screens 42, 95 mounted on the platform 18 protects the probe 28 from mass and heat flows caused by convection and from electrical interferences what results in increase of the accuracy of the measurement.

The fixation of the scanning device (piezoscanner) 33 directly on the platform 18 simplifies the adjustment of the scanning probe microscope as in this case the platform 18 with the scanning device (piezoscanner) 33 may be taken out from the mechanism 6 for the movement of the sample 40 and needed adjustments may be performed separately. It results in improvement of adjustment quality and therefore increases the accuracy of the measurement.

The possibility of conjugation of the first drive 4 with the moveable carriage 26 in some cases is allowing excluding the third drive 31 from the device. Thus a mass load on the platform 18 may be decreased what improves its vibration stability and therefore increases the accuracy of the measurement.

The introduction of the module of the modification (of the probe 28) with the ring electrode 57 and the electrolyte 58 enables one to perform an operative sharpening of the probe 28 (the first needle 61). It broadens the functional capabilities of the system. Besides this it is allowing decreasing of the time and laboriousness of the sharpening of the probe 28 (the first needle 61). Thus it is possible to perform measurements with the probe 28 of higher quality what results in increased accuracy of the measurements.

The usage of the cryogenic chamber 103 for the cooling of the punch 2, the sample 40 and the probe 28 enable one to perform the modification (sectioning) of the surface of the sample 40 by means of the punch 2 at the temperature To below the room temperature (To < 20°C). For a number of materials, such as soft polymers with the glass transition temperature less than room temperature (T_{C} < 20°C) sectioning at the temperature equal or below the glass transition temperature T_{C} (T_{O} ≤ T_{C}) results in decrease of a level of a structural damage of the surface which in turn increase the accuracy of analysis of structures of the samples 40.

### BIBLIOGRAPHY REFERENCES:

[1] Dykstra, Michael J., Reuss, Laura E., "Biological Electron Microscopy: Theory, Techniques, and Troubleshooting", 2nd ed., 2003, ISBN: 978-0-306-47749-2, Springer-Verlag New-York Heidelberg, pp. 153-158.
[2] A. E. Efimov, A. G: Tonevitsky, M. Dittrich & N. B. Matsko "Atomic force microscope (AFM) combined with the ultramicrotome: a novel device for the serial section tomography and AFM/TEM complimentary structural analysis of biological and polymer samples". Journal of Microscopy, Vol. 226, Pt 3, June 2007, pp. 207-217.
[3] A. Alekseev, A. Efimov, K. Lu, J. Loos. "Three-dimensional electrical property reconstruction of conductive nanocomposites with nanometer resolution", Advanced Materials, Vol. 21, 48 (2009), pp. 4915 - 4919.

## Claims

1. A scanning probe microscope combined with a device for modification of a surface of a sample (40) comprising a base (1) elongated along a first geometrical axis (OO₁), on which there are mounted:
∘ a punch (2) provided with a first drive (4) and adapted at least for the modification of the surface of the sample (40) and
∘ a mechanism (6) for the movement of the sample (40) provided with a second drive (7), the mechanism (6) being installed on the base (1) by means of a hinge (5) and being conjugated with the second drive (7), the second drive (7) being adapted for moving the sample (40) towards the punch (2) and for modifying of the sample (40) by the punch (2),
the scanning probe microscope further comprising:
- a scanning device (33) mounted on the mechanism (6) for the movement of the sample (40),
- the sample (40) fixed on the scanning device (33), the scanning device (33) being adapted for performing a raster scanning of the sample (40),
- a first clamp (27) provided with a probe (28) adapted for probing the sample (40) and
- a control unit (107) adapted for controlling of at least the scanning device (33) and the probe (28),
**characterized in that** it comprises a platform (18) with a first and a second guides (22), (23) on which a moveable carriage (26) is mounted, the movable carriage (26) being adapted for moving along the first geometrical axis (OO₁),
**in that** the platform (18) is fixed on the mechanism (6) for the movement of the sample (40),
**in that** the second drive (7) comprises a first eccentric (8) mounted on a second mechanical axis (9) perpendicular to the first geometrical axis (OO₁) in a first case 10, the first eccentric (8) being conjugated with a rotational driver (11),
**in that** the second drive (7) is adapted, by means of the first eccentric (8), to move towards the base (1) the mechanism (6) for the movement of the sample (40) and the sample (40) along the coordinate (Z) perpendicular to the first geometrical axis (OO₁),
**in that** the scanning device (33) is adapted for moving the sample (40) along the first geometrical axis (OO₁),
**in that** the first clamp (27) with the probe (28) are mounted on the moveable carriage (26), and
**in that** the moveable carriage (26) is adapted for approaching the probe (28) to the sample (40) after the modification of the sample (40) by the punch (2).

2. The scanning probe microscope according to claim 1, **characterized in that** it comprises a third drive (31) conjugated with the moveable carriage (26), and **in that** the controlling unit (107) is adapted for controlling the third drive (31).

3. The scanning probe microscope according to claim 2, **characterized in that** the third drive (31) is mounted on the platform (18).

4. The scanning probe microscope according to claim 2, **characterized in that** the third drive (31) is mounted on the base (1).

5. The scanning probe microscope according to claim 1, **characterized in that** the first drive (4) is conjugated with the moveable carriage (26), and **in that** the controlling unit (107) is adapted for controlling the first drive (4).

6. The scanning probe microscope according to any one of claims 1 to 5, **characterized in that** it comprises a first screen (42) mounted on the platform (18) with a possibility of moving in regard to it.

7. The scanning robe microscope according to claim 6, **characterized in that** it comprises a second screen (95) mounted on the platform (18) with a possibility of moving in regard to it.

8. The scanning probe microscope according to any one of claims 1 to 7, **characterized in that** the scanning device (33) is fixed on the platform (18).

9. The scanning probe microscope according to any one of claims 1 to 8, **characterized in that** a module for modification of the probe (28) is mounted on the first drive (4), and **in that** the controlling unit (107) is adapted for controlling the first drive (4).

10. The scanning probe microscope according to claim 9, **characterized in that** the module for modification of the probe (28) comprises a holder (3) and a ring electrode (57) with an electrolyte (58), and **in that** the ring electrode (57) is fixed in the holder (3).

11. The scanning probe microscope according to any one of claims 1 to 10, **characterized in that** the punch (2), the first clamp (27) with the probe (28) and the scanning device (33) with the sample (40) are placed in a cryogenic chamber (103) with a possibility of their cooling.

## Patentansprüche

1. Rastersondenmikroskop, in Verbindung mit einer Vorrichtung zum Modifizieren einer Oberfläche einer Probe (40), eine Basis (1) umfassend, die sich entlang einer ersten geometrischen Achse (OO₁) erstreckt, auf der Folgendes montiert wird:
• ein Stempel (2), der mit einem ersten Antrieb (4) versehen ist, und zum Modifizieren der Oberfläche der Probe (40) ausgeführt ist, und
• ein Mechanismus (6) zum Bewegen der Probe (40), der mit einem zweiten Antrieb (7) versehen ist, wobei der Mechanismus (6) mit einem Gelenk (5) auf der Basis (1) installiert ist und mit dem zweiten Antrieb (7) abgewandelt wird, wobei der zweite Antrieb (7) zum Bewegen der Probe (40) zum Stempel (2) und zum Modifizieren der Probe (40) durch den Stempel (2) ausgeführt ist,
wobei das Rastersondenmikroskop darüber hinaus Folgendes umfasst:
- eine Scanvorrichtung (33), die zum Bewegen der Probe (40) auf dem Mechanismus (6) montiert ist,
- die Probe (40), die auf der Scanvorrichtung (33) befestigt ist, wobei die Scanvorrichtung (33) zur Durchführung eines Rasterscans der Probe (40) ausgeführt ist,
- eine erste Klemme (27), die mit einer Sonde (28) bereitgestellt wird, und zur Untersuchung der Probe (40) ausgeführt ist, und
- eine Steuereinheit (107), die zum Steuern zumindest der Scanvorrichtung (33) und der Sonde (28) ausgeführt ist,
**dadurch gekennzeichnet, dass** es eine Plattform (18) mit einer ersten und einer zweiten Führung (22), (23) umfasst, auf der ein beweglicher Wagen (26) montiert ist, wobei der bewegliche Wagen (26) für eine Bewegung entlang der ersten geometrischen Achse (OO₁) ausgeführt ist,
dadurch, dass die Plattform (18) zum Bewegen der Probe (40) auf dem Mechanismus (6) befestigt ist,
dadurch, dass der zweite Antrieb (7) einen ersten Exzenter (8) umfasst, der auf einer zweiten mechanischen Achse (9) senkrecht zur ersten geometrischen Achse (OO₁) montiert ist, wobei in einem ersten Gehäuse (10), der erste Exzenter (8) mit einem Drehantrieb (11) abgewandelt wird, dadurch, dass der zweite Antrieb (7) durch den ersten Exzenter (8) ausgeführt ist, um den Mechanismus (6) zum Bewegen der Probe (40) zur Basis (1) zu bewegen, sowie die Probe (40) entlang der Koordinate (Z) senkrecht zur ersten geometrischen Achse (OO₁),
dadurch, dass die Scanvorrichtung (33) zum Bewegen der Probe (40) entlang der ersten geometrischen Achse (OO₁) ausgeführt ist,
dadurch, dass die erste Klemme (27) mit der Sonde (28) auf dem beweglichen Wagen (26) montiert sind, und
dadurch, dass der bewegliche Wagen (26) zum Annähern der Sonde (28) an die Probe (40) nach der Modifizierung der Probe (40) durch den Stempel (2) ausgeführt ist.

2. Rastersondenmikroskop nach Anspruch 1, **dadurch gekennzeichnet, dass** es einen dritten Antrieb (31) umfasst, der mit dem beweglichen Wagen (26) abgewandelt ist, und dadurch, dass die Steuereinheit (107) zum Steuern des dritten Antriebs (31) ausgeführt ist.

3. Rastersondenmikroskop nach Anspruch 2, **dadurch gekennzeichnet, dass** der dritte Antrieb (31) auf der Plattform (18) montiert ist.

4. Rastersondenmikroskop nach Anspruch 2, **dadurch gekennzeichnet, dass** der dritte Antrieb (31) auf der Basis (1) montiert ist.

5. Rastersondenmikroskop nach Anspruch 1, **dadurch gekennzeichnet, dass** der erste Antrieb (4) mit dem beweglichen Wagen (26) abgewandelt wird, und dadurch, dass die Steuereinheit (107) zur Steuerung des ersten Antriebs (4) ausgeführt ist.

6. Rastersondenmikroskop nach einem der Ansprüche 1 bis 5, **dadurch gekennzeichnet, dass** es einen ersten Bildschirm (42) umfasst, der auf der Plattform (18) mit einer Möglichkeit zum Bewegen in Bezug dazu montiert ist.

7. Rastersondenmikroskop nach Anspruch 6, **dadurch gekennzeichnet, dass** es einen zweiten Bildschirm (95) umfasst, der auf der Plattform (18) mit einer Möglichkeit zum Bewegen in Bezug dazu montiert ist.

8. Rastersondenmikroskop nach einem der Ansprüche 1 bis 7, **dadurch gekennzeichnet, dass** die Scanvorrichtung (33) auf der Plattform (18) befestigt ist.

9. Rastersondenmikroskop nach einem der Ansprüche 1 bis 8, **dadurch gekennzeichnet, dass** ein Modul zum Modifizieren der Sonde (28) auf dem ersten Antrieb (4) montiert ist, und dadurch, dass die Steuereinheit (107) zum Steuern des ersten Antriebs (4) ausgeführt ist.

10. Rastersondenmikroskop nach Anspruch 9, **dadurch gekennzeichnet, dass** das Modul zum Modifizieren der Sonde (28) einen Halter (3) und eine Ringelektrode (57) mit einem Elektrolyt (58) umfasst, und dadurch, dass die Ringelektrode (57) im Halter (3) befestigt ist.

11. Rastersondenmikroskop nach einem der Ansprüche 1 bis 10, **dadurch gekennzeichnet, dass** der Stempel (2), die erste Klemme (27) mit der Sonde (28) und die Scanvorrichtung (33) mit der Probe (40) in einer Tieftemperaturkammer (103) mit der Möglichkeit für deren Kühlung, platziert werden.

## Revendications

1. Microscope à balayage de sonde combiné avec un dispositif pour la modification d'une surface d'un échantillon (40) comprenant une base (1) allongée le long d'un premier axe géométrique (OO₁), sur laquelle sont montés :
∘ un poinçon (2) doté d'un premier entraînement (4) et adapté au moins pour la modification de la surface de l'échantillon (40) et
∘ un mécanisme (6) pour le déplacement de l'échantillon (40) doté d'un deuxième entraînement (7), le mécanisme (6) étant installé sur la base (1) à l'aide d'une articulation (5) et étant conjugué avec le deuxième entraînement (7), le deuxième entraînement (7) étant adapté pour déplacer l'échantillon (40) vers le poinçon (2) et pour la modification de l'échantillon (40) par le poinçon (2),
le microscope à balayage de sonde comprenant en outre :
- un dispositif de balayage (33) monté sur le mécanisme (6) pour le déplacement de l'échantillon (40),
- l'échantillon (40) fixé sur le dispositif de balayage (33), le dispositif de balayage (33) étant adapté pour réaliser un balayage de trame de l'échantillon (40),
- une première pince (27) dotée d'une sonde (28) adaptée pour sonder l'échantillon (40) et
- une unité de commande (107) adaptée pour commander au moins le dispositif de balayage (33) et la sonde (28),
**caractérisé en ce qu'**il comprend une plateforme (18) avec un premier et un deuxième guidages (22), (23) sur lesquels un chariot mobile (26) est monté, le chariot mobile (26) étant adapté pour se déplacer le long du premier axe géométrique (OO₁),
**en ce que** la plateforme (18) est fixée sur le mécanisme (6) pour le déplacement de l'échantillon (40),
**en ce que** le deuxième entraînement (7) comprend une première excentrique (8) montée sur un deuxième axe mécanique (9) perpendiculaire au premier axe géométrique (OO₁) dans un premier boîtier (10), la première excentrique (8) étant conjuguée avec un entraînement rotatif (11),
**en ce que** le deuxième entraînement (7) est adapté, à l'aide de la première excentrique (8), pour déplacer, vers la base (1), le mécanisme (6) pour le déplacement de l'échantillon (40) et l'échantillon (40) le long de la coordonnée (Z) perpendiculaire au premier axe géométrique (OO₁),
**en ce que** le dispositif de balayage (33) est adapté pour déplacer l'échantillon (40) le long du premier axe géométrique (OO₁),
**en ce que** la première pince (27) avec la sonde (28) sont montées sur le chariot mobile (26), et
**en ce que** le chariot mobile (26) est adapté pour rapprocher la sonde (28) de l'échantillon (40) après la modification de l'échantillon (40) par le poinçon (2).

2. Microscope à balayage de sonde selon la revendication 1, **caractérisé en ce qu'**il comprend un troisième entraînement (31) conjugué avec le chariot mobile (26), et **en ce que** l'unité de commande (107) est adaptée pour commander le troisième entraînement (31).

3. Microscope à balayage de sonde selon la revendication 2, **caractérisé en ce que** le troisième entraînement (31) est monté sur la plateforme (18).

4. Microscope à balayage de sonde selon la revendication 2, **caractérisé en ce que** le troisième entraînement (31) est monté sur la base (1).

5. Microscope à balayage de sonde selon la revendication 1, **caractérisé en ce que** le premier entraînement (4) est conjugué avec le chariot mobile (26) et **en ce que** l'unité de commande (107) est adaptée pour commander le premier entraînement (4).

6. Microscope à balayage de sonde selon l'une quelconque des revendications 1 à 5, **caractérisé en ce qu'**il comprend un premier écran (42) monté sur la plateforme (18) avec une possibilité de déplacement par rapport à celle-ci.

7. Microscope à balayage de sonde selon la revendication 6, **caractérisé en ce qu'**il comprend un deuxième écran (95) monté sur la plateforme (18) avec une possibilité de déplacement par rapport à celle-ci.

8. Microscope à balayage de sonde selon l'une quelconque des revendications 1 à 7, **caractérisé en ce que** le dispositif de balayage (33) est fixé sur la plateforme (18).

9. Microscope à balayage de sonde selon l'une quelconque des revendications 1 à 8, **caractérisé en ce qu'**un module pour la modification de la sonde (28) est monté sur le premier entraînement (4), et **en ce que** l'unité de commande (107) est adaptée pour commander le premier entraînement (4).

10. Microscope à balayage de sonde selon la revendication 9, **caractérisé en ce que** le module pour la modification de la sonde (28) comprend un support (3) et une électrode annulaire (57) avec un électrolyte (58), et **en ce que** l'électrode annulaire (57) est fixée dans le support (3).

11. Microscope à balayage de sonde selon l'une quelconque des revendications 1 à 10, **caractérisé en ce que** le poinçon (2), la première pince (27) avec la sonde (28) et le dispositif de balayage (33) avec l'échantillon (40) sont placés dans une chambre cryogénique (103) avec une possibilité de refroidissement de ceux-ci.
